Europäisches Patentamt

European Patent Office

Office européen des brevets

(11) Publication number : **0 455 548 A2**

(12) # EUROPEAN PATENT APPLICATION

(21) Application number : 91401122.6

(22) Date of filing : 26.04.91

(51) Int. Cl.⁵ : **G11B 15/26, G11B 15/665**

(30) Priority : 30.04.90 KR 575290 U

(43) Date of publication of application :
06.11.91 Bulletin 91/45

(84) Designated Contracting States :
DE FR GB

(71) Applicant : **GOLDSTAR CO. LTD.**
20, Yoido-Dong Yongdungpo-Ku
Seoul (KR)

(72) Inventor : **Hwang, Hak Sun**
438-3, Seongnae 3-Dong, Kangdong-Ku
Seoul (KR)

(74) Representative : **Fort, Jacques**
**CABINET PLASSERAUD 84, rue d'Amsterdam**
**F-75009 Paris (FR)**

(54) **Reel driving apparatus of video cassette recorders.**

(57) A reel driving apparatus of VCR comprising a capstan shaft, a bracket, a driving pulley, a center gear, a supply reel gear, a take-up reel gear, a pair of fixed shafts mounted to both end portions of the bracket, a pair of upper connecting gears mounted to the fixed shafts, always engaging with the upper connecting gears and having bosses formed downward, a pair of lower connecting gears also mounted to the fixed shafts under the upper connecting gears, always engaging with the center gear and having bosses formed upward, a pair of clutch springs inserted onto the connecting boss portions between the upper and lower connecting gears. The present invention can provide a reel driving apparatus of VCR which can prevent the tape therein from departing from the running passage when the operation mode of the VCR shifts between its play mode and rewind mode, so that it can provide a picture of good quality.

EP 0 455 548 A2

## BACKGROUND OF THE INVENTION

The present invention relates to reel driving apparatus of video cassette recorders (VCR), more particularly to a reel driving apparatus of video cassette recorders capable of making the cassette tape therein stably run through a running passage.

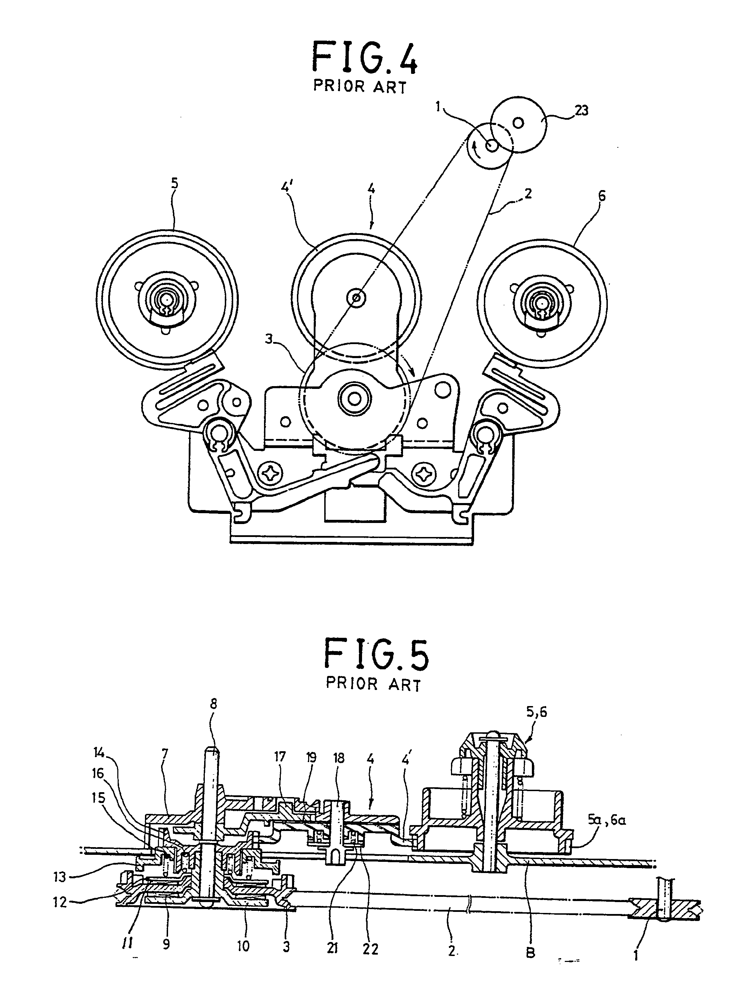

As shown in Fig. 4 which is a schematic plane view of a conventional reel driving apparatus of the video cassette recorder (hereinafter, referred to as VCR), the conventional reel driving apparatus comprises a capstan shaft 1, a driving pulley 3 being supplied with rotation driving power from the capstan shaft 1 through a belt 2 which is belted between the capstan shaft 1 and the driving pulley 3, an idle gear 4' which is an element of idle assembly 4 and supplied with the rotation driving power after passing through a power transmitting passage from the driving pulley 3. In result, the idle gear 4 selectively engages with a supply reel gear 5a of a supply reel 5 or a take-up reel gear 6a of a take-up reel 6 in order to drive one of the reels 5 and 6 of which gear 5a or 6a engages with the idle gear 4'.

As shown in Fig. 5 which is a longitudinal section view of the conventional reel driving apparatus of Fig. 4, the conventional reel driving apparatus also includes a bracket 7 mounted to a base B, a fixed shaft 8 fixed to the bracket 7 by being inserted into a fixing hole of the bracket 7. The fixed shaft 8 mounts the driving pulley 3 at lower portion thereof, a holder 10 with a felt 9 thereon under the driving pulley 3, and a disc 12 with a felt 11 on its under surface over the driving pulley 3. Also over the disc 12, the fixed shaft 8 mounts in sequence a clutch disk 13 and a center gear 14 which are smoothly coupled to each other because of their polygonal coupling structures. The clutch disk 13 and the disk 12 have a first compression coil spring 15 interposed therebetween, also the disk 12 and the center gear 14 have a second compression coil spring 16 in the same manner. The clutch disk 13 can rotate with the driving pulley 3 which is coupled to it when it is shifted downward by means of a lever (not shown).

Between the center gear 14 and the bracket 7, an idle arm 17, an element of the idle assembly 4, is located. The idle arm 17 is also fixed to a fixed shaft 18 at its other end portion opposite to the one end portion fixed to the fixed shaft 18. The fixed shaft 18 also mounts, in interposition of a flat washer 19, the idle gear 4' of the idle assembly 4 which is adapted for engaging with the center gear 14. Also, there are a compression coil spring 21 and a washer 22 located under the idle gear 4' in order to force upward and elastically the idle gear 4'.

In Fig. 5, the reference numeral 23 designates a pinch roller which comes in contact with the capstan shaft 1 and functions to guide the tape.

In operation, for example an operation in case of play mode, of the VCR, the rotation driving power from the capstan shaft 1 which rotates clockwise is transmitted to the belt 2, the driving pulley 3 and the felts 9 and 11 in sequence causing the felts 9 and 11 to generate friction torque and slip. Thereafter, the friction torque is transmitted to the holder 10, the disk 12, the center gear 14 and the idle gear 4' in sequence, thereby the idle gear 4' engages with the take-up reel gear 6a of the take-up reel 6 causing the take-up reel 6 to rotate clockwise.

If the operation mode of the VCR shifts from the play mode to the rewind mode by pressing the rewind key, the capstan shaft 1 rotates counterclockwise resulting in generating friction torque of which working direction is opposite to that in the above-mentioned play mode. Thus, the idle arm 17 rotates counterclockwise causing the idle gear 4' to be disjoined from the take-up reel gear 6a and then engage with the supply reel gear 5a, thus the friction torque from the felts 9 and 11 is transmitted to the supply reel 5. In this rewind mode, the transmission passage of the rotation driving power from the capstan shaft 1 is the same as that of the play mode.

However, while the idle gear 4' of the conventional reel driving apparatus is disjoined from the take-up reel gear 6a and then engages with the supply reel gear 5a, the driving power can not be transmitted any one of the gears 5a and 6a because the idle gear 4' does not engage with the gears 5a and 6a, thereby the tape coming out of the capstan shaft 1 and the pinch roller 23 can not be would on to the supply reel 5. Therefore, the tape may depart from the head drum of the VCR in a moment causing the picture quality of the VCR to deteriorate.

To solve the above-mentioned problem, it has been used a technique that while the idle gear 4' is disjoined from the take-up reel gear 6a and then engages with the supply reel gear 5a, the pinch roller 23 is disjoined from the capstan shaft 1 in order to prevent the tape from coming out of the pinch roller 23 and the capstan shaft 1. However, the technique can not completely solve the above-mentioned problem because there is a mechanical sequence, that is a time difference between the shifting of the idle gear 4' from the take-up reel gear 6a to the supply reel gear 5a and the disjoining of the pinch roller 23 from the capstan shaft 1.

Also, the above-mentioned problem happens when the operation mode of the VCR shifts from the rewind mode to the play mode, thereby it needs to solve the problem in order to improve the picture quality of the VCR.

## SUMMARY OF THE INVENTION

Accordingly, it is an object of the present invention to provide a reel driving apparatus of VCR by which the above-mentioned problem of the conventional reel driving apparatus can be solved.

In accordance with the present invention, the object can be accomplished by providing a reel driving apparatus of the VCR comprising the capstan shaft, the bracket, the driving pulley mounted to the bracket, the belt adapted for transmitting the rotation driving power from the capstan shaft to the driving pulley, the holder with the felt, the disk with the felt, the supply reel gear and the take-up reel gear, the center gear adapted for driving the supply reel gear or the take-up reel gear by means of the rotation driving power transmitted from the capstan shaft thereto through a power transmitting passage, further comprising a pair of fixed shafts mounted to both end portions of the bracket, a pair of upper connection gears mounted to the fixed shafts, always engaging with the upper connecting gears and having bosses formed downward, a pair of lower connecting gears mounted to the fixed shafts under the upper connecting gears, always engaging with said center gear and having bosses formed upward, a pair of clutch springs inserted onto the connecting boss portions between the upper and lower connecting gears.

## BRIEF DESCRIPTION OF THE DRAWINGS

The above and other objects features and advantages of the present invention will be more clearly understood from the following detailed description taken in conjunction with the accompanying drawings, in which:

Fig. 1 is a schematic plane view of a reel driving apparatus in accordance with the present invention;

Fig. 2 is a longitudinal section view of the reel driving apparatus of Fig. 1;

Fig. 3 is an exploded perspective view of the reel driving apparatus of Fig. 1;

Fig. 4 is a schematic plane view of a reel driving apparatus in accordance with prior art; and

Fig. 5 is a longitudinal section view of the reel driving apparatus of Fig. 4.

## DETAILED DESCRIPTION OF PREFERRED EMBODIMENTS

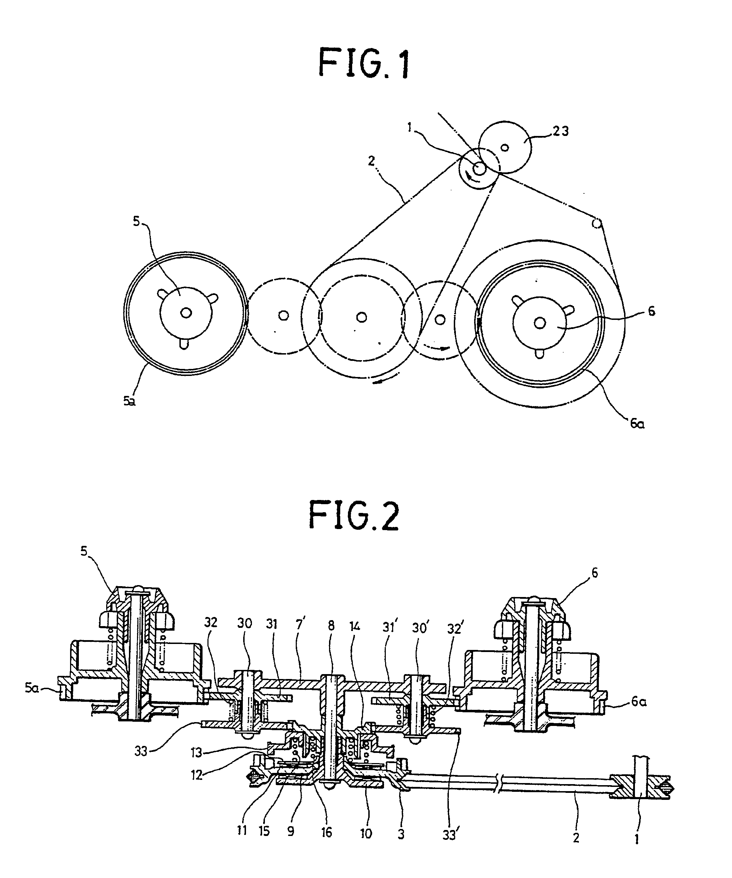

Referring to Figs. 1 to 3 which are respectively a plane view a longitudinal section view and an exploded perspective view of a reel driving apparatus according to this invention, the passage through which the rotation driving power from the capstan shaft 1 is transmitted to the center gear 14 is the same as that of the above-mentioned conventional reel driving apparatus of the VCR.

As shown in Figs. 1 and 2, the present reel driving apparatus comprises the same elements for transmitting the rotation driving power from the capstan shaft 1 as those of the conventional reel driving apparatus, such as the bracket 7 mounted to the base B, the fixed shaft 8 fixed to the bracket 7, the driving pulley 3 mounted to the lower portion of the fixed shaft 8, the belt 2 which is belted between the capstan shaft 1 and the driving pulley 3, the holder 10 having the felt 9 thereon and mounted to the fixed shaft 8 under the driving pulley 3, and disk 12 having the felt 11 on its under surface and mounted to the fixed shaft 8 above the driving pulley 3.

Also, the present reel driving apparatus comprises the clutch disk 13 and the center gear 14 which are mounted to the fixed shaft 8 above the disk 12 and smoothly coupled to each other because their polygonal coupling structures, the first and second compression coil springs 15 and 16 respectively interposed between the disk 12 and the clutch disk 13, between the disk 12 and the center gear 14. The clutch disk 13 has a plurality of protrusions 13a formed downward. The driving pulley 3 has a plurality of projections 3a formed inwardly. Each protrusion 13a is inserted into a space between the projections 3a when the clutch disk 13 shifts downward by a lever (not shown).

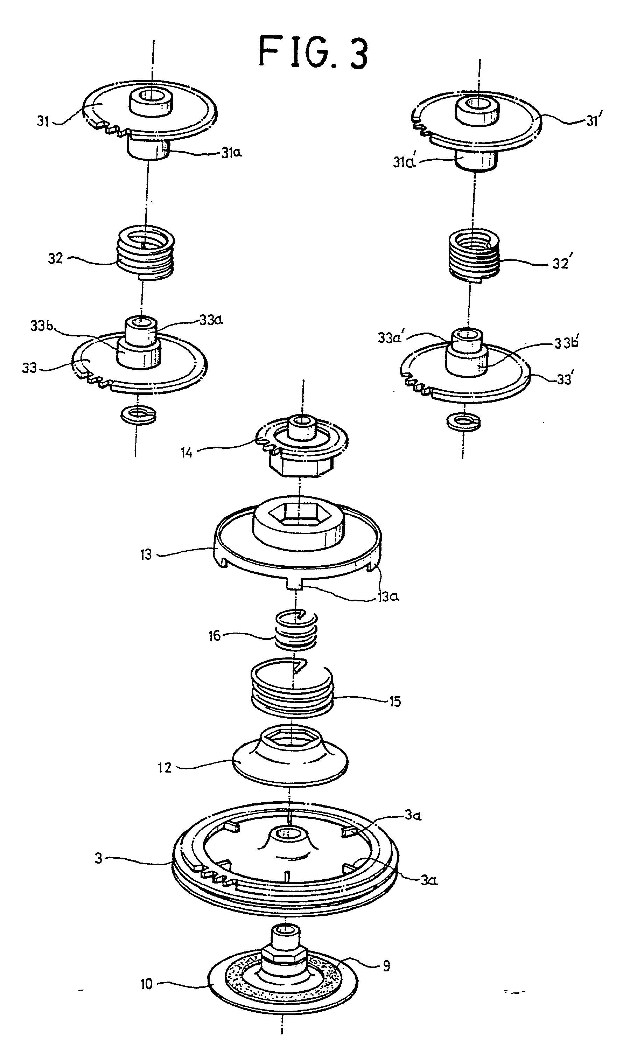

As shown in Figs. 2 and 3, besides the above well known construction, the reel driving apparatus according to the present invention further comprises a pair of fixed shafts 30 and 30′ downwardly mounted to both end portions of the bracket 7, a pair of upper connecting gears 31 and 31′, a pair of clutch springs 32 and 32′ and a pair of lower connecting gears 33 and 33′ mounted in sequence to the fixed shafts 30 and 30′. Each of the upper connecting gears 31 and 31′ respectively has bosses 31a and 31a′ and engages with the supply reel gear 5a and the take-up reel gear 6a. Each of the lower connecting gears 33 and 33′ has cylindrical connectors 33a, 33a′ and bosses 33b, 33b′, always engages with the center gear 14. The cylindrical connectors 33a and 33a′ are adapted to be inserted into the corresponding bosses 31a and 31a′. Each of the clutch springs 32 and 32′ is inserted onto the corresponding connecting boss portions formed by the bosses 31a, 33b and 31a′, 33b′.

Therefore, the clutch spring 32′ located near the take-up reel 6 can be tightened up when the lower connecting gear 33′ rotates counterclockwise, thereby the rotation driving power from the lower connecting gear 33′ can be transmitted to the upper connecting gear 31′. However, when the lower connecting gear 33′ rotates clockwise, the rotation driving power can not be transmitted to the gear 31′ because the clutch spring 32′ is loosened.

On the other hand, the clutch spring 32 located near the supply reel 5 can be tightended up when the lower connecting gear 33 rotates clockwise, thus the rotation driving power from the lower connecting gear 33 can be transmitted to the upper connecting gear 31. However, when the lower connecting gear 33 rotates counterclockwise, the driving power from the gear 33 can not be transmitted to the gear 31 because the clutch spring 32 is loosened.

The operation of the above-mentioned reel driving apparatus in accordance with the present invention will be described in the following description.

In play mode operation of the VCR, the rotation driving power is transmitted from the capstan shaft 1 to the center gear 14 through the same power transmitting passage as that of the conventional apparatus as above described in the description of prior art. Thus, the center gear 14 can rotate clockwise, causing the lower connecting gears 33 and 33' to respectively rotates counterclockwise. At this time, the clutch spring 32' located near the take-up reel 6 is tightened up as above-mentioned resulting in transmitting the rotation driving power from the lower connecting gear 33' to the upper connecting gear 31', so that the take-up reel 6 of which gear 6a engages with the upper connecting gear 31' can rotate clockwise.

Simultaneously, because the clutch spring 32 located near the supply reel 5 is loosened as above-mentioned, the rotation driving power from the lower connecting gear 33 can not be transmitted to the upper connecting gear 31. Therefore, the supply reel 6 can not rotate.

On the other hand, all the elements of the present reel driving apparatus in case of rewind mode operation of the VCR rotate in a direction opposite to that in play mode, causing the supply reel 5 to rotate and the take-up reel 6 not to rotate. Therefore, even though the operation mode of the VCR shifts from the play mode to the rewind mode by pressing the rewind key, the tape does not come out of the pinch roller 23 and the capstan shaft 1 because of the newly invented construction according to the present invention in which the supply reel gear 5a and the take-up reel gear 6a always engage with the upper connecting gears 31 and 31' respectively. In result, it needs no mechanism for disjoining the pinch roller 23 from the capstan shaft 1, which mechanism has been obliged to provide to the conventional apparatus as described above.

In the same manner, according to the present reel driving apparatus, the tape can be prevented from being come out of the capstan shaft 1 and the pinch roller 23 when the operation mode of the VCR shifts from the rewind mode to the play mode.

As described above, the reel driving apparatus of the VCR in accordance with the present invention can prevent the tape from departing from its running passage when the operation mode of the VCR shifts between play mode and rewind mode, in result a picture of good quality can be provided.

Although the preferred embodiments of the present invention have been disclosed for illustrative purpose, those skilled in the art will appreciate that various modifications, additions and substitutions are possible, without departing from the scope and spirit of the invention as disclosed in the accompanying claims.

## Claims

1. A reel driving apparatus of VCR comprising a capstan shaft, a bracket, a driving pulley mounted to the bracket, a belt adapted for transmitting the rotation driving power from the capstan shaft to the driving pulley, a holder with a felt, a disk with a felt, a supply reel gear and a take-up reel gear, a center gear adapted for selectively driving the supply reel gear or the take-up reel gear by means of the rotation driving power transmitted from the capstan shaft thereto through a power transmitting passage, further comprising:

a pair of fixed shafts mounted to both end portions of said bracket;

a pair of upper connecting gears mounted to said fixed shafts, always engaging with said upper connecting gears and having bosses formed downward;

a pair of lower connecting gears mounted to said fixed shafts under said upper connecting gears, always engaging with said center gear and having bosses formed upward; and

a pair of clutch springs inserted onto the connecting boss portions formed by connecting said bosses of said upper and lower connecting gears.

# FIG.1

# FIG.2

# FIG. 3

31
31a
32
33b
33a
33
14
13
13a
16
15
12
3
3a
3a
10
9

31'
31a'
32'
33a'
33b'
33'

6

# FIG.4
PRIOR ART

# FIG.5
PRIOR ART